# EUROPÄISCHE PATENTSCHRIFT

(11) **EP 1 067 369 B1**
(45) Veröffentlichungstag und Bekanntmachung des Hinweises auf die Patenterteilung: **09.12.2009**
(21) Anmeldenummer: 99113557.5
(22) Anmeldetag: 06.07.1999
(51) Int. Cl.: G01J 3/02, G01J 3/46

(54) **Lichtmessvorrichtung**
Light measuring device
Dispositif de mesure de lumière

(43) Veröffentlichungstag der Anmeldung: 10.01.2001
(73) Patentinhaber: X-Rite Europe GmbH, 8105 Regensdorf (CH)
(72) Erfinder: von Orelli, Adrian, 8045 Zürich (CH); Ehbets, Peter, 8046 Zürich (CH)
(74) Vertreter: Schwabe - Sandmair - Marx

(56) Entgegenhaltungen:
- EP-A- 0 064 024
- DE-A- 3 622 043
- DE-A- 19 633 557

## Beschreibung

Die Erfindung betrifft eine Messvorrichtung für von einem Messobjekt emittiertes, remittiertes oder transmittiertes Licht gemäss dem Oberbegriff des unabhängigen Anspruchs.

Im Zuge der immer weiteren Verbreitung von farbtauglicher Computer-Peripherie gewinnt auch das sog. Color Management, d.h. die gegenseitige Abstimmung aller farbtauglichen Computer-Peripherie-Geräte (Monitor, Scanner, Drucker etc.) sowie die Kommunikation verbindlicher Farbwerte eine immer stärkere Bedeutung.

Ein zentraler Punkt des Color Management ist die Erstellung von herstellerspezifischen oder einer Norm (z.B. ICC) entsprechenden Geräteprofilen. Diese Geräteprofile ermöglichen die Umrechnung von gerätespezifischen Farbwerten in geräteunabhängige und somit allgemeingültige Farbwerte. Die Erstellung von Geräteprofilen basiert auf der Charakterisierung der farbmetrischen Eigenschaften der Ein- und Ausgabegeräte wie Farbdrucker und Scanner. Diese erfordert die farbmetrische Bewertung von Farbtestkarten (den sogenannten Testcharts), wie sie z.B. in der ISO Norm IT8 beschrieben sind. Eine solche Testchart setzt sich aus mehreren hundert Testfeldern zusammen. Das manuelle Einmessen aller Farbfelder einer Testchart erfordert mit den verfügbaren Handmessgeräten einen grossen Arbeits- und Zeitaufwand. Dieser setzt sich aus dem präzisen manuellen Positionieren des Messgerätes auf dem Messfeld und aus der von einer bis mehrere Sekunden dauernden Messzeit pro Farbfeld zusammen. Das Einmessen einer Testchart kann mit einem computergesteuerten XY-Verschiebetisch wohl automatisiert, jedoch nur unwesentlich beschleunigt werden. Eine solcher XY-Verschiebetisch ist zudem sehr teuer.

Die Charakterisierung und Kalibrierung von Bildschirmen erfolgt durch die direkte Messung des vom Bildschirm emittierten Lichts. Das Messgerät wird dazu üblicherweise z.B. mit einem Saugnapf auf der Mattscheibe des Bildschirms befestigt.

Aus den beschriebenen Arbeitsschritten lassen sich folgende Grundanforderungen an ein Messgerät für Color Management herleiten: Das Messgerät muss eine sehr flexible Messgeometrie für die Charakterisierung der verschiedenen Ein- und Ausgabegeräte (Emission und Remission) sowie eine einfache und effiziente Möglichkeit zum Einlesen von ein- oder zweidimensionalen Farbtestkarten aufweisen.

Existierende Color Management Lösungen benötigen mehrere verschiedene Messgeräte und Vorrichtungen und sind in der Regel verhältnismässig teuer. Der im Vergleich zu den Peripherie-Geräten hohe Anschaffungspreis der Messgeräte beschränkte den Einsatz von Color Management auf High End Anwendungen. Existierende Low Cost Farbmessgeräte verursachen einen zu grossen Arbeitsaufwand beim Erstellen von Geräteprofilen und sind daher für diese Anwendung nur beschränkt geeignet.

Ein charakteristisches Merkmal der existierenden Hand-Farbmessgeräte ist eine klassische serielle Schnittstelle, über welche die geräte-interne, computer-basierte Steuerung mit einem angeschlossenen externen Rechner kommunizieren kann. Unter Kommunikation ist dabei unter anderem zu verstehen, dass einerseits Messvorgänge vom externen Rechner ausgelöst und gesteuert werden können und dass anderseits die dabei gewonnenen Messdaten in den externen Rechner transferiert werden können, z.B. um dort weiterverarbeitet zu werden. Die Kommunikation wird durch entsprechende, im Farbmessgerät fest gespeicherte und im externen Rechner bei Bedarf geladene Software gesteuert. Ferner können Daten (z.B. Messparameter) und ggf. auch spezifische Software vom externen Rechner in den internen Computer des Messgeräts geladen werden. Schliesslich können Messvorgänge auch manuell am Messgerät selbst ausgelöst werden.

Typische Vertreter von existierenden, handhaltbar ausgestalteten Messgeräten sind das "Colortron" (US-A 5684582), das "Digital Swatchbook" der Firma X-Rite und das "Spectrolino" der Anmelderin. Als Low Cost Gerät ist das "Colormouse too" der Firma ColorSavvy zu erwähnen.

Die genannten Geräte unterscheiden sich durch die Art ihrer Spektral-Analysatoren. Das "Swatchbook" basiert auf einer grösseren Anzahl von schmalbandigen Interferenzfiltern, welche auf einer drehbaren im Strahlengang angeordneten Scheibe angebracht sind. Aufgrund der groben Wellenlängenauflösung ist dieses Konzept für die Messung der schmalen Emissionslinien von CRT-Monitoren nicht geeignet.

Das "Colortron" basiert auf einem klassischen Gittermonochromator kombiniert mit einer Empfängerdiode. Diese Architektur bewertet die verschiedenen Wellenlängen zeitlich sequentiell. Dies führt bei Remissionsmessungen zu langen Messzeiten. Bei Emissionsmessungen am Monitor liegen die Messzeiten bei unbrauchbar langen Werten.

Beim "Colormouse too" Gerät wird die Spektral-Separation über die Beleuchtung durch Verwendung von verschieden Leuchtdioden (LED) erreicht. Die geringe Beleuchtungsstärke der LED kombiniert mit dem sequentiellen Messen der verschiedenen Wellenlängen führen zu langen Messzeiten. Das Messprinzip kann inhärent nicht für Wellenlängen selektive Emissionmessung angewendet werden.

Das "Spectrolino" der Anmelderin basiert auf einem konventionellen Diodenzeilen-Spektrometer, welches aufgrund der gleichzeitigen Messung aller Wellenlängen kurze Messzeiten ermöglicht und sich für Emissions- wie Remissionsmessungen einsetzen lässt. Die heute allgemein bei Diodenzeilen-Spektralmodulen gebräuchlichen Herstellungstechnologien verursachen relativ hohe Kosten und sind somit für ein Low Cost Gerät ungeeignet.

Das Einmessen einer kompletten Testchart wird heute mit zeitintensivem manuellem Ausführen von Einzelmessungen, mit einem ausschliesslich für diese Anwendung spezialisierten Gerät streifenweise (z.B. DTP 41 von X-Rite), oder vollautomatisch mit einem auf einem computergesteuerten XY-Tisch montiertem Messgerät (z.B. Spectrolino-Spectroscan der Anmelderin) durchgeführt. Auf einem computergesteuerten Messtisch montierte "scannende" Farbmessgeräte sind vor allem in der Druckindustrie schon bekannt und z.B. in der EP-A 64024 beschrieben.

Ein manuell bewegtes "scannendes" Handmessgerät ist Gegenstand der DE-A 197 16 066. Das dort beschriebene Gerät wird im Einsatz entlang seiner Längskante verschoben, was aus ergonomischer Sicht nicht optimal ist. Es wertet für die Messfeld-Erkennung die eingehenden Messwerte mit dem im Messkopf vorhandenen Rechner aus. Dies erfordert im Messgerät aufgrund der hohen Messgeschwindigkeit den Einsatz eines äusserst leistungsfähigen Kleincomputers. Dieses Konzept ist für ein Low-Cost Gerät nicht einsetzbar.

Andere Beispiele können aus den Dokumenten DE 19617106, EP 913674 und US 5267178 entnommen werden.

Durch die vorliegende Erfindung sollen eine Messvorrichtung der gattungsgemässen Art dahingehend verbessert und die konstruktiven und konzeptionellen Voraussetzungen für ein extrem kostengünstig herzustellendes Handmessgerät geschaffen werden, mit welchem sich alle für einen kompletten Color Management Arbeitsablauf nötigen Messungen effizient und präzise durchführen lassen. Die Messvorrichtung soll in einem kontinuierlichen Messmode etwa 100 Messungen pro Sekunde ausführen können, wodurch das automatische Erfassen von mehreren Farbfeldern durch manuelles Überstreichen der Farbfelder mit dem Messkopf der Vorrichtung ermöglicht wird. Die Messvorrichtung soll zusätzlich zur kostengünstigen Herstellbarkeit klein und handlich ausgestaltet werden können, bedienungsfreundlich sein und keiner Wartung bedürfen und so einem wesentlich breiteren Anwenderkreis zugänglich werden.

Die Lösung dieser der Erfindung zugrundeliegenden Aufgabe ergibt sich aus den im kennzeichnenden Teil des unabhängigen Anspruchs beschriebenen Merkmalen. Besonders vorteilhafte Ausgestaltungen und Weiterbildungen sind Gegenstand der abhängigen Ansprüche.

Durch die erfindungsgemässe Ausbildung der bi-direktionalen Schnittstelle als USB- oder Fire Wire- Schnittstelle sind die technischen Voraussetzungen für eine grundlegend andersartige Architektur (Konzeption) der Messvorrichtung geschaffen, welche die in der Messvorrichtung erforderlichen Rechnerressourcen auf das absolute Minimum reduzieren und so eine besonders kostengünstige Herstellung der Vorrichtung erlauben. Diese Reduktion wird gemäss einem weiteren wesentlichen Aspekt der Erfindung durch die konsequente Auslagerung der digitalen Datenauswertung in den angeschlossenen Host Rechner erreicht. Die Messvorrichtung selbst dient nur noch zur Rohdaten-Akquisition und deren Digitalisierung, was die Herstellungskosten massiv reduziert. Die Auswertung der Messwerte erfolgt im angeschlossen Host Rechner unter optimaler Ausnutzung der mit den heutigen Personal Computern verfügbaren Ressourcen (Rechengeschwindigkeit, Speichermenge etc.), welche um ein Mehrfaches grösser sind als sie die in Handmessgeräten typischerweise verwendeten Rechner aufweisen. Sie erlauben die Echtzeit-Auswertung der Rohdaten mit ausgefeilteren Algorithmen als dies in Handmessgeräten (bei vertretbarem Aufwand) möglich wäre. Durch die Auslagerung der Datenauswertung in den externen Host Rechner ist es ferner möglich, die Messvorrichtung trotz ihrer relativ geringen RechnerRessourcen so auszulegen, dass sie in einem kontinuierlichen Messmode etwa 100 Messungen pro Sekunde ausführen kann. Diese Geschwindigkeit erlaubt das automatische Erfassen von mehreren Farbfeldern durch manuelles Überstreichen der Farbfelder mit dem Messkopf der Messvorrichtung.

Diese erfindungsgemässe Architektur der Messvorrichtung erfordert aufgrund der Übertragung sämtlicher Rohdaten bei der angestrebten hohen Messgeschwindigkeit im "scannenden" Betrieb eine deutlich höhere Bandbreite der Datenschnittstelle, als sie die bei konventionellen Geräten üblicherweise eingesetzte serielle Schnittstelle aufweist. Die erfindungsgemässe Messvorrichtung verwendet daher zur Datenübertragung vom und zum externen Host Rechner eine USB oder Fire Wire (IEEE 1394) Schnittstelle.

Die erfindungsgemässe Messvorrichtung ist zudem so ausgelegt, dass sie mit der von der Schnittstelle (USB oder Fire Wire) zur Verfügung gestellten Energie gespeist werden kann und kein zusätzliches (externes) Netzteil benötigt, was eine weitere Kostenreduktion ermöglicht.

Die für den scannenden Betrieb erforderlichen kurzen Messzeiten bei Remissionsmessungen bedingen eine hohe Beleuchtungsstärke bei stabiler Farbtemperatur und Intensität. Diese Bedingungen können in an sich bekannter Weise mit einer Präzisionsglühlampe mit mindestens 1.5 Watt elektrischer Leistung und spezieller Steuerelektronik erfüllt werden.

Beim Einschalten einer Glühlampe ist deutlich mehr Leistung aufzuwenden, als im anschliessenden stationären Betrieb benötigt wird. Bei der Verwendung der USB-Schnittstelle stellt sich dabei folgendes Problem: Die USB Norm erlaubt bei einem "High Power Device" eine elektrische Leistungsaufnahme von maximal 2.375 W. Dies reicht zwar für die Stromversorgung des internen Rechners und den stationären Betrieb der Lampe, ist aber während der Einschaltphase der Lampe viel zu wenig.
Gemäss der vorliegenden Erfindung wird dieses Problem dadurch gelöst, dass die Messvorrichtung mit einem Energiespeicher ausgestattet ist, welcher vor dem Starten der Lampe geladen wird und anschliessend die vor dem und bis zum Erreichen des stationären Zustandes nötige zusätzliche elektrische Leistung bereit stellt. Die Glühlampe kann dadurch so dimensioniert werden, dass sie im stationären Betrieb die maximal verfügbare Leistung aufnehmen kann und so die obigen Anforderungen erfüllt.

Eine weitere Kostenreduktion ist dadurch möglich, dass das Spektrometer-Modul der Messvorrichtung mit einer speziellen thermischen Drift-Kompensation ausgestattet ist, welche den kostengünstigen Aufbau des Spektrometers aus Kunststoff im Spritzgussverfahren gestattet. Ein Spektrometer mit einer solchen thermischen Drift-Kompensation ist z.B. in der US-Patentanmeldung Nr. 20000538236 vom 30 März 2000 (entsprechend der EP-Patentanmeldung Nr. 99106111.0 vom 01. April 1999) der Anmelderin beschrieben.

Für das Einmessen von Farbstreifen im scannenden Betrieb braucht der Benutzer ein Hilfsmittel, welches das Führen der Messöffnung des Messgerätes entlang dem Farbstreifen erleichtert. Gemäss einem weiteren wichtigen Aspekt der Erfindung ist der Messkopf der Messvorrichtung mit einer im wesentlichen rohrstutzenartig ausgebildeten Tubusverlängerung ausgestattet, welche die Messöffnung aufweist und mechanisch in einen länglichen Führungsschlitz einer linealartigen Verschiebelehre eingehängt werden kann. Die Tubusverlängerung bildet also gewissermassen eine mechanische Schnittstelle zur Verschiebelehre. Der als Blende wirkende Führungsschlitz dieser Verschieblehre dient der visuellen Kontrolle der Positionierung des Messkopfes auf dem Messtreifen. Im eingehängten Zustand ist die Messvorrichtung um ihre Hochachse (optische Achse des Messkopfs) relativ zur Verschiebelehre eingeschränkt drehbar und um ihre Querachse entlang der Lehre verschiebbar. Die Verschiebelehre wird dabei mit der einen und die Messvorrichtung mit der anderen Hand gehalten. Die Verschiebelehre ihrerseits verfügt über eine steife drehbar gelagerte Welle mit zwei an den Enden angeordneten Rollen, welche ausschliesslich das parallele Verschieben der Lehre ermöglicht, was das Positionieren der Lehre beim Einmessen einer zweidimensionalen Testchart erleichtert..

Gemäss einer weiteren vorteilhaften Ausführungsform weist der Messkopf bzw. Messtubus an seinem unteren Ende eine weitere mechanische Schnittstelle, z.B. eine Bajonett-Verbindung, auf, welche es erlaubt, eine Vorrichtung (z.B. einen Saugnapf) für die Fixierung der Vorrichtung an der Mattscheibe eines Monitors zu befestigen. Der Messtubus ist auswechselbar und kann z.B. durch einen anderen ersetzt werden, welcher zur Messung der spektralen Zusammensetzung des Umgebungslichts vor der Messöffnung mit einem Diffusorplättchen versehen ist.

Die erfindungsgemässe Messvorrichtung stellt somit ein kostengünstig herzustellendes Handmessgerät dar, mit welchem sich alle für einen kompletten Color Management Arbeitsablauf nötigen Messungen effizient und präzise durchführen lassen. Es ist so ausgelegt, dass es in einem kontinuierlichen Messmodus etwa 100 Messungen pro Sekunde ausführen kann. Diese Geschwindigkeit erlaubt das automatische Erfassen von mehreren Farbfeldern durch manuelles Überstreichen der Farbfelder mit dem Messkopf des Geräts. Die erfindungsgemässe Messvorrichtung bietet erstmals eine komplette low cost Color Management Lösung basierend auf einem einzelnen kompakten Messgerät, welches alle beschrieben Anforderungen für den effizienten Einsatz im Color Management Umfeld erfüllt und kostengünstig herzustellen ist. Durch die Kombination von mit hoher Geschwindigkeit ausführbaren sequentiellen Messungen und der gleichzeitigen manuellen Verschiebung des Messkopfes erhält man ein abtastendes ("scannendes") System, welches mit einer Bewegung eine ganze Reihe von Farbfeldern einmessen kann. Dabei wird die automatische Erkennung der Farbfelder nachträglich durch Analyse der kontinuierlich erfassten Messwerte erreicht.

Im folgenden wird die Erfindung anhand der Zeichnung näher erläutert. Darin zeigen:

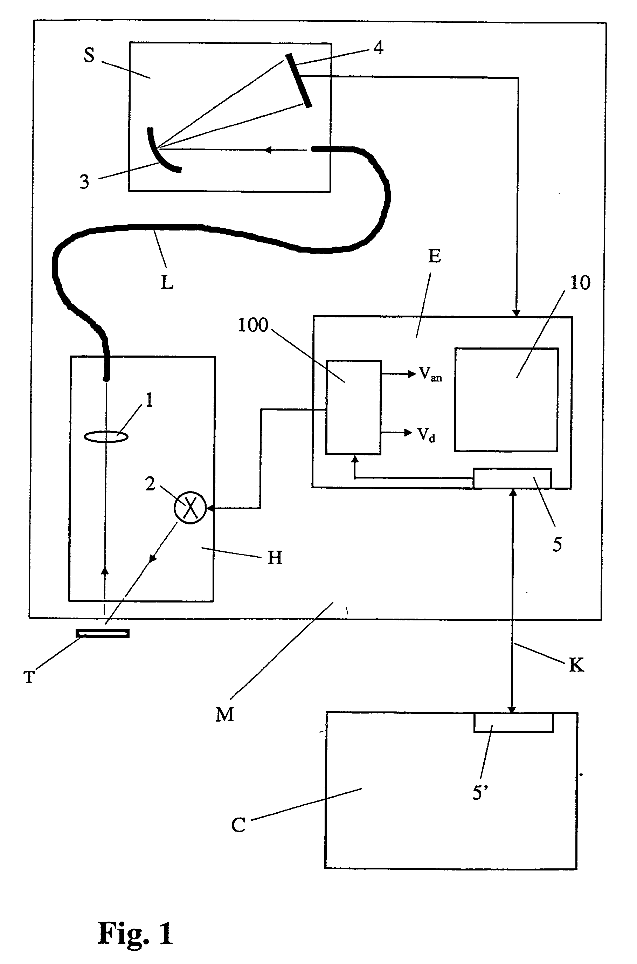

- Fig. 1: ein Prinzipschema der erfindungsgemässen Messvorrichtung,
- Fig. 2: eine schematische Darstellung der in der Steuerelektronik der Messvorrichtung vorhandenen Stromversorgungsschaltung,
- Fig. 3: eine schematische Darstellung der Steuerelektronik der Messvorrichtung,
- Fig. 4: eine schematische Darstellung der Programm-Architektur,
- Fig. 5: eine schematische Ansicht der Messvorrichtung in Kombination mit einer Verschiebelehre,
- Fig. 6: einen Detailschnitt durch den Messkopf der Messvorrichtung mit Verschiebelehre,
- Fig. 7: einen Axial-Schnitt durch eine weitere Ausführungsform des Tubus des Messkopfs,
- Fig. 8: eine axiale Innenansicht des Tubus der Fig. 7,
- Fig. 9: eine Unteransicht einer Halterung für die Befestigung der Messvorrichtung an der Mattscheibe eines Bildschirms,
- Fig. 10: eine Schnittdarstellung der Halterung in am Tubus des Messkopfs befestigtem Zustand und
- Fig. 11: eine Schrägansicht eines Tubus des Messkopfs der Messvorrichtung.

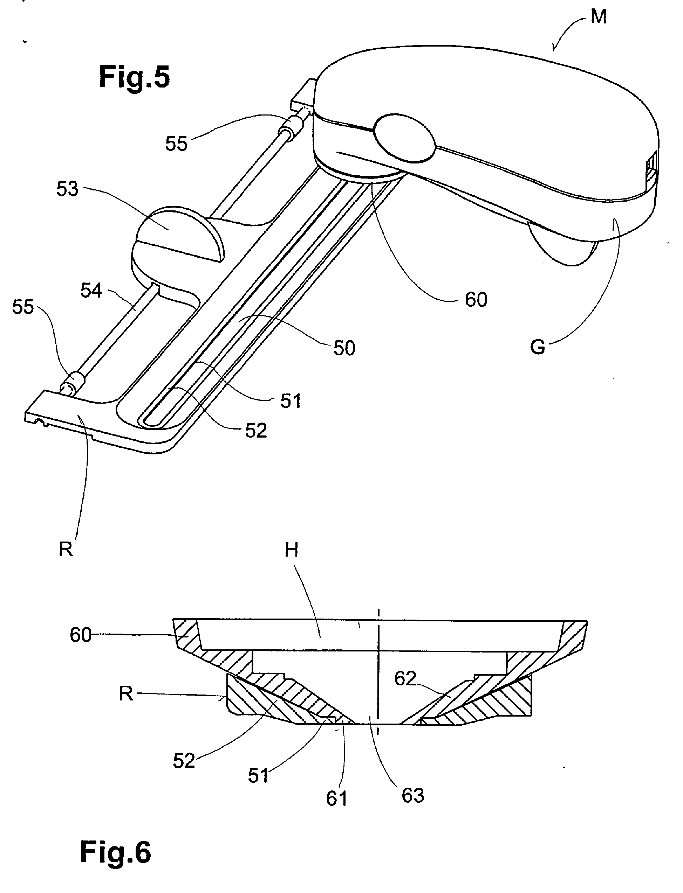

Die dargestellte erfindungsgemässe, als Ganzes mit M bezeichnete Messvorrichtung umfasst im wesentlichen einen optischen Messkopf H, ein Spektrometer S und eine Steuerelektronik E, die alle zusammen in einem aus Fig.5 ersichtlichen kleinen handhaltbaren Gehäuse untergebracht sind.

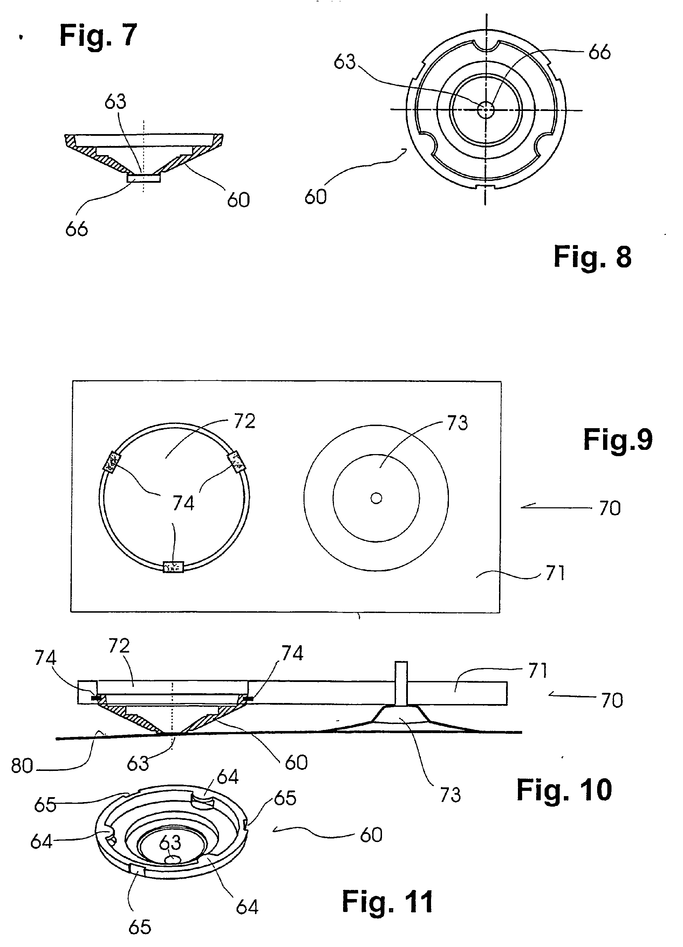

Der optische Messkopf H ist an sich konventionell gemäss den internationalen Normen ausgebildet und enthält eine Optikanordnung 1 zur Erfassung des von einem zu messenden Messobjekt T ausgehenden, remittierten, transmittierten oder emittierten Messlichts und zur Einkopplung des erfassten Messlichts in einen Lichtleiter L, welcher den Messkopf H mit dem Spektrometer S optisch verbindet. Falls der Messkopf H für Remissionsmessungen ausgebildet ist, enthält er ferner eine Lampe 2 und zugehörige, in der Zeichnung nicht dargestellte optische Mittel, um das Messobjekt T unter den bekannten standardisierten Bedingungen mit Licht zu beaufschlagen. Der Messkopf H kann, wie im Ausführungsbeispiel gezeigt, für Remissionsmessungen ausgebildet sein oder auch speziell an Einsätze für Transmissions- und Emissionsmessungen angepasst sein. Die Messvorrichtung M kann ferner auch mit mehreren auswechselbaren, für unterschiedliche Messzwecke adaptierten Messköpfen H ausgestattet sein. Alternativ kann der Messkopf H an seinem unteren Ende mit zwei oder mehreren auswechselbar befestigten, Tubus-förmigen Adaptern ausgestattet sein, welche für unterschiedliche Messeinsätze angepasst sind. Zwei typische Ausführungsbeispiele solcher Adapter sind in den Figuren 7-11 näher dargestellt.

Das Spektrometer S ist an sich ebenfalls konventionell ausgebildet und enthält im wesentlichen ein konkaves Reflexionsbeugungsgitter 3 als Wellenlängen selektives Element sowie einen fotoelektrischen Wandler in Form einer linearen Fotodiodenanordnung 4. Das vom Messkopf H erfasste Messlicht wird über den Lichtleiter L in das Spektrometer S eingekoppelt und auf das Beugungsgitter 3 geleitet. Dieses reflektiert es wellenlängenabhängig auf die Fotodiodenanordnung 4, wobei die einzelnen Fotodioden der Anordnung 4 Licht unterschiedlicher Wellenlängenbereiche empfangen und so den spektralen Anteilen des Messlichts entsprechende elektrische Signale erzeugen. Die typische Auflösung beträgt dabei etwa 10 -20 nm über einen Wellenlängenbereich von ca. 380 - 730 nm.

In einer bevorzugten Ausführungsform ist das Spektrometer mit einer in der US-Patentanmeldung Nr. 20000538236 vom 30. März 2000 (entsprechend der EP-Patentanmeldung Nr. 99106111.0 vom 01. April 1999) beschriebenen Temperatur-Drift-Kompensation versehen, welche es erlaubt, das Spektrometer in Kunststoff-Spritzgusstechnik auszuführen und dadurch besonders kostengünstig herzustellen. Alternativ können auch andere Spektrometertypen, wie Fourier-Transform, Fabry-Perot, Prisma, Verlaufsfilter und mehrere Interferenzfilter, eingesetzt werden.

Die Steuerelektronik E ist in ihrer prinzipellen Funktion, soweit der eigentliche Messvorgang betroffen ist, ebenfalls konventionell. Sie enthält in an sich bekannter Weise einen digitalen Rechner (Mikrocomputer) 10 mit zugehöriger Software (Programm) und dient zur Ansteuerung der Lampe 2 und der Fotodiodenanordnung 4, zur Umwandlung der von der Fotodiodenanordnung 4 erzeugten elektrischen Signale in entsprechende digitale Messdaten sowie zur Kommunikation mit einem externen Rechner (Host) C über eine Schnittstelle 5, welche gemäss einem ersten wesentlichen Aspekt der Erfindung als USB-Schnittstelle (Universal Serial Bus) ausgebildet ist. Der externe Rechner (Host) C muss natürlich ebenfalls über eine entsprechende USB-Schnittstelle 5' verfügen. Die Verbindung zwischen dem externen Rechner (Host) C und dem Messgerät M erfolgt über ein passendes Kabel K. Alternativ kann die Schnittstelle auch als sog. Fire Wire (IEEE 1394) Schnittstelle oder als eine andere bidirektionale Hochleistungsdatenschnittstelle mit mindestens gleicher Datenübertragungskapazität ausgebildet sein.

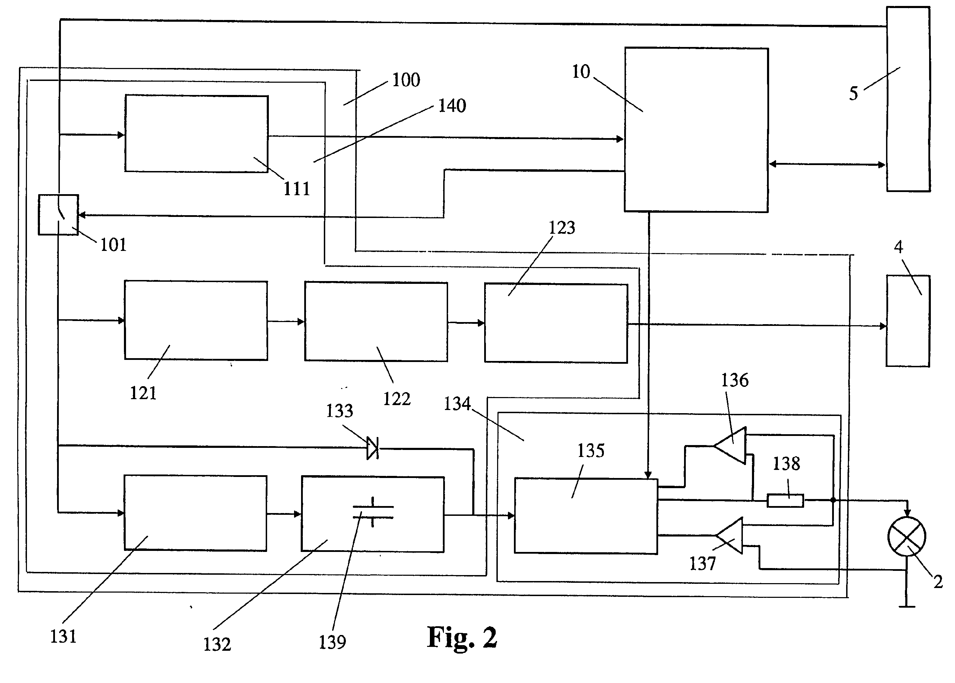

Ein weiterer wesentlicher Aspekt der vorliegenden Erfindung besteht darin, dass die Messvorrichtung über keine eigene Stromversorgung verfügt, sondern die zum Betrieb erforderliche Energie der USB- bzw. Fire Wire - Schnittstelle 5 entnimmt (wenn die Messvorrichtung an einen externen Rechner angeschlossen ist). Zu diesem Zweck ist die Steuerelektronik E mit einer Stromversorgungsschaltung 100 ausgestattet, welche alle für die einzelnen Komponenten des Messgeräts M, insbesondere also den internen Rechner (Mikrocomputer) 10, die Fotodiodenanordnung 4 und die Lampe 2 erforderlichen Speisespannungen aus der von der bzw. vom externen Rechner über die USB-bzw. Fire Wire - Schnittstelle zur Verfügung gestellten standardisierten Versorgungsspannung erzeugt. Der Aufbau dieser Stromversorgungsschaltung wird im folgenden anhand der Fig. 2 erläutert.

Die Stromversorgungsschaltung 100 ist direkt mit den die standardisierte USB-Versorgungsspannung führenden Anschlüssen der USB-Schnittstelle 5 der Messvorrichtung M verbunden und gliedert sich im wesentlichen in drei Zweige.

In einem ersten Zweig befindet sich ein linearer Spannungsregler 111, welcher die Versorgungsspannung V_{d} für den internen Rechner 10 und seine zugehörigen digitalen Komponenten und Peripherie-Bausteine erzeugt. Die beiden anderen Zweige sind über einen vom internen Rechner 10 gesteuerten Schalter 101 an die USB-Schnittstelle 5 angeschlossen.

Sobald der interne Rechner 10 mit Spannung versorgt wird, nimmt er Verbindung mit dem Host-Rechner auf. Sobald der interne Rechner gemäss USB-Standard vom Host die Zusicherung für die angeforderte elektrische Leistung erhält, schliesst er den Schalter 101 und legt dadurch die USB-Versorgungsspannung an die beiden anderen Zweige an.

Der zweite Zweig der Stromversogungsschaltung 100 umfasst einen Gleichspannungswandler 121, einen linearen Spannungsregler 122 und ein Glättungsfilter 123 und erzeugt die Versorgungsspannung Vₐₙ für die Fotodiodenanordnung 4 sowie eventuelle analoge Komponenten der Steuerelektronik E.

Der dritte Zweig der Stromversorgungsschaltung umfasst einen Gleichspannungswandler 131, eine elektrische Speicherstufe 132, einen z.B. durch eine Diode 133 realisierten Überbrückungsschalter und eine vom internen Rechner 10 angesteuerte Lampentreiberstufe 134, die ihrerseits typischerweise einen spannungs- und stromgesteuerten Gleichspannungswandler 135, zwei Differenzverstärker 136 und 137 und einen Stromfühlerwiderstand 138 umfasst.

Die der eigentlichen Bereitstellung der Versorgungsspannungen dienenden Komponenten 111, 121-123 und 131-133 der Stromversorgungsschaltung 100, also alle Komponenten ausser der Lampentreiberstufe 134, sind gesamthaft mit 140 bezeichnet.

Die Lampentreiberstufe 134 ist an sich konventionell aufgebaut und bedarf deshalb keiner näheren Erklärung. Sie begrenzt während der Aufheizzeit der Lampenwendel den Strom durch die Lampe 2 und hält danach die Spannung an der Lampe konstant.

Der Rechner 10 veranlasst in an sich bekannter Weise über die Lampentreiberstufe 134 das Ein- bzw. Ausschalten der Lampe 2.

Der Strombedarf während der Aufheizzeit der Lampenwendel der üblicherweise für Messvorrichtungen der vorliegenden Art eingesetzten Lampen übersteigt die Leistung, welche eine USB-Schnittstelle standardgemäss maximal bereitstellt, um ca. einen Faktor 2. Deshalb ist gemäss einem weiteren wichtigen Aspekt der Erfindung die elektrische Speicherstufe 132 vorgesehen. Diese wird während der Phasen, in denen die Lampe 2 nicht eingeschaltet ist, über den Gleichspannungswandler 131 auf eine höhere Spannung als die USB-Versorgungsspannung aufgeladen und deckt den erhöhten Energiebedarf der Lampe während deren Einschaltphase. Wenn die Lampe 2 stabil brennt, wird sie über den Überbrückungsschalter 133 (und die Lampentreiberstufe 134) direkt aus der USB-Versorgungsspannung gespeist. Die elektrische Speicherstufe 132 ist an sich konventionell und enthält als wesentlichstes Element einen Speicherkondensator 139.

Die Gleichspannungswandler (DC/DC-Konverter) 121 und 131 setzen die ihnen zugeführte USB-Versorgungsspannung in eine höhere Gleichspannung um. Solche Gleichspannungswandler sind dem Fachmann an sich bekannt und bedürfen deshalb keiner besonderen Erläuterung. Analoges gilt für die linearen Spannungsregler 111 und 122.

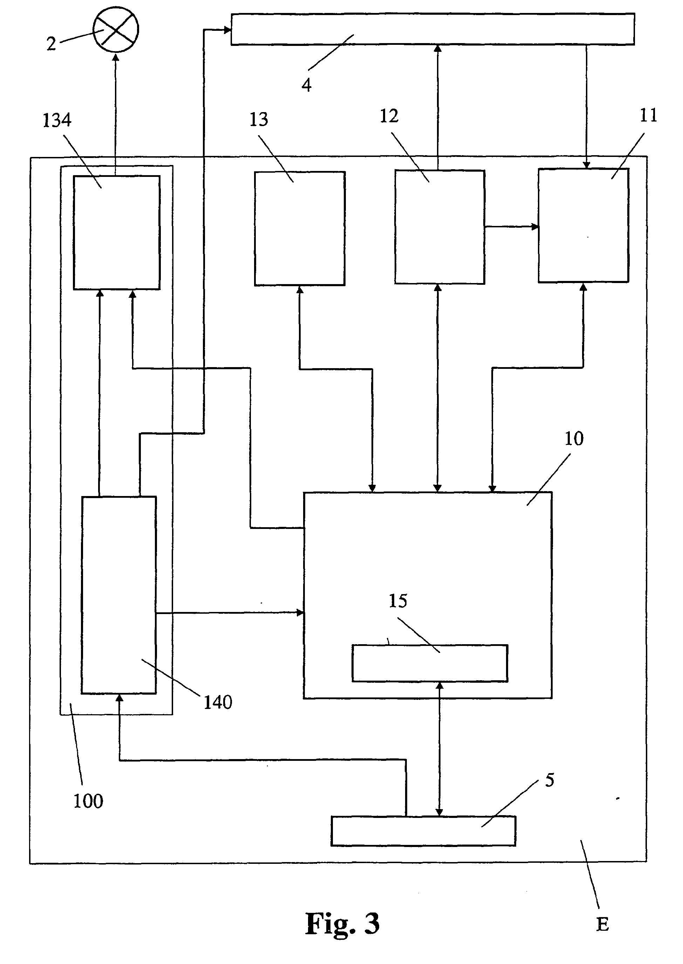

Die Figur 3 stellt ein Blockschema der Steuerelektronik E dar. Die Steuerelektronik E umfasst neben dem schon erwähnten internen digitalen Rechner (Mikrocomputer) 10 und der Stromversorgungsschaltung 100 sowie der körperlichen USB- Schnittstelle 5 einen Analog/Digital-Wandler 11, einen Taktgenerator 12 und einen nicht-flüchtigen Speicher (EEPROM) 13. Ferner ist im Rechner 10 ein USB-Zustandsautomat (USB-Engine) 15 gemäss USB-Standard implementiert. Der Taktgenerator 12 erzeugt, gesteuert durch den Rechner 10, in an sich bekannter Weise die für den Betrieb der Fotodiodenanordnung 4 und des Analog/Digital-Wandlers 11 erforderlichen Taktimpulse. Der Analog/Digitalwandler 11 wandelt die aus der Fotodiodenanordnung 4 ausgelesenen, den spektralen Anteilen des Messlichts entsprechenden analogen elektrischen Signale in entsprechende digitale Messdaten um. Im nicht-flüchtigen Speicher 13 sind für die Messvorrichtung spezifische Kalibrationsdaten abgelegt (für die erforderliche und an sich bekannte und konventionelle Kalibrierung der eingesetzten Fotodiodenanordnung).

Die vorstehenden Ausführungen gelten in analoger Weise auch für eine Fire Wire Schnittstelle.

Für das Einmessen von Farbstreifen im scannenden Betrieb braucht der Benutzer ein Hilfsmittel, welches das Führen der Messöffnung des Messgerätes entlang dem Farbstreifen und die Positionierung auf einer zweidimensionalen Testchart erleichtert. Ein besonders zweckmässiges und vorteilhaftes Hilfsmittel in Form einer Verschiebelehre R ist in den Figuren 5 und 6 dargestellt.

Die Verschiebelehre R ist länglich linealartig ausgebildet und weist einen geraden länglichen Führungsschlitz 50 auf, der sich im wesentlichen über die Länge der Verschiebelehre erstreckt. Ferner ist die Verschiebelehre R mit einem Grifforgan 53 sowie einer zum Führungsschlitz 50 parallelen, drehbar gelagerten Welle 54 versehen, auf der an ihren beiden Enden zwei Walzen 55 drehfest befestigt sind. Auf diese Weise kann die Verschiebelehre R auf einer Unterlage senkrecht zur Längsrichtung des Führungsschlitzes 50 parallelverschoben werden.

Der Führungsschlitz 50 ist im Querschnitt (senkrecht zu seiner Längsrichtung) trichterförmig ausgebildet, d.h. er weist einen (bezogen auf die Unterlage) engeren steilwandigen Abschnitt 51 und einen sich flach v-förmig erweiternden oberen Abschnitt 52 auf.

Der Messkopf H der Messvorrichtung weist an seinem unteren Ende eine mechanische Schnittstelle zur Verschiebelehre R bzw. deren Führungsschlitz 50 auf. Konkret heisst dies, dass der Messkopf H an seinem unteren Ende mit einem Adapter oder Tubus 60 ausgestattet ist, welcher einen konischen Abschnitt 62 und einen (aussen) zylindrischen Abschnitt 61 aufweist, die gegengleich zum Profil des Führungsschlitzes 50 der Verschiebelehre R ausgebildet sind. Im Zentrum des zylindrischen Abschnitts 61 des Tubus 60 befindet sich eine Messöffnung 63. Der Adapter bzw. Tubus 60 selbst ist auswechselbar ausgebildet und kann, wie insbesondere aus Fig. 11 hervorgeht, mittels nach innen vorspringender Bajonett-Klingen 64 in entsprechende, am unteren Ende des Messkopfs M vorgesehene Bajonett-Schlitze (nicht dargestellt) eingeklinkt und so am Messkopf befestigt bzw. wieder von diesem gelöst werden.

Die Messvorrichtung M kann mit diesem Adapter bzw. Tubus 60 ihres Messkopfs H in die Verschiebelehre R bzw. deren Führungsschlitz 50 eingehängt werden (Fig.6). Dabei ist die Messvorrichtung M um ihre Hochachse (optische Achse des Messkopfs und gleichzeitig Achse des zylindrischen Abschnitts 61 des Tubus 60) relativ zur Verschiebelehre R eingeschränkt drehbar und um ihre Querachse entlang der Verschiebelehre verschiebbar. Die Verschiebelehre R wird dabei im praktischen Einsatz mit der einen und die Messvorrichtung M mit der anderen Hand gehalten.

Im praktischen Einsatz wird die Verschiebelehre R so auf der zu messenden Unterlage positioniert, dass ihr Führungsschlitz 50 im wesentlichen etwa mittig auf dem einzumessenden Farbmessstreifen zu liegen kommt und durch diesen hindurch sichtbar ist. Der als Blende wirkende Führungsschlitz 50 dient somit zur visuellen Kontrolle der Positionierung des Messkopfes H auf dem Messtreifen. Durch manuelles Parallelverschieben der Verschiebelehre R können nacheinander alle Farbmessstreifen einer Testchart rasch und zielsicher angefahren und eingemessen werden.

Gemäss einer weiteren vorteilhaften Ausführungsform weist der Messkopf an seinem unteren Ende oder der am Messkopf auswechselbar befestigte Tubus 60 ein Befestigungsmittel bzw. allgemein eine weitere mechanische Schnittstelle auf, welche es erlaubt, eine Haltevorrichtung für die Fixierung der Messvorrichtung z.B. an der Mattscheibe eines Monitors oder in einer anderen Ausführung an einem LCD-Display zu befestigen. Im Detail ist dies für das Beispiel der Befestigung an einem Monitor in den Figuren 9 und 10 dargestellt.

Die als Ganzes mit 70 bezeichnete Haltevorrichtung besteht im wesentlichen aus einer ebenen Platte 71, in der sich eine dem Tubusdurchmesser angepasste Öffnung 72 befindet und an der ferner ein Saugnapf 73 befestigt ist. Im Bereich der Öffnung 72 sind drei einwärts vorspringende Bajonett-Klingen 74 vorgesehen, welche mit entsprechenden, am Aussenumfang des Tubus 60 vorgesehenen Bajonett-Schlitzen 65 zusammenarbeiten. Auf diese Weise kann die Platte 71 mit dem Saugnapf 73 am Tubus 60 montiert und wieder von diesem abgenommen werden. Für Messungen an einem Monitor wird die Haltevorrichtung 70 am Tubus 60 der Messvorrichtung M fixiert und dann der Saugnapf 73 an der Mattscheibe 80 des Monitors befestigt. Über die Haltevorrichtung wird dadurch die gesamte Messvorrichtung M am Monitor festgehalten.

Die Figuren 7 und 8 zeigen eine Ausführungsform des Adapters bzw. Tubus 60, welche speziell für Umgebungslicht-Messungen adaptiert ist. Bei dieser Ausführungsform ist die Messöffnung 63 des Tubus durch eine Streuscheibe 66 abgedeckt. Ansonsten ist der Tubus 60 gleich ausgebildet wie der in den übrigen Figuren gezeigte.

Mit diesem Tubus kann die spektrale Zusammensetzung des Umgebungslichts gemessen werden. Die Kenntnis der spektralen Zusammensetzung des Umgebungslichts kann z.B. zur Simulation des Einflusses der Beleuchtung auf die Erscheinung eines Farbmusters eingesetzt werden. Auch die Eignung einer bestimmten Beleuchtungsart zur Abmusterung kann mit diesem Hilfsmittel beurteilt werden.

Im folgenden wird die prinzipielle Funktionsweise der Messvorrichtung erläutert.

Zunächst wird die Messvorrichtung M mittels des Kabels K an die USB-Schnittstelle 5' des externen Rechners C angeschlossen. Dieser beginnt dann gemäss Standard-USB-Protokoll den Enumerationprozess und ermittelt dabei die aktuelle (USB)-Gerätenummer der angeschlossenen Messvorrichtung, so dass diese als Peripherie-Gerät identifiziert wird. Der externe Rechner startet dann einen in ihm gespeicherten, dem identifizierten Peripherie-Gerät zugeordneten und für dieses konfigurierten Geräte-Treiber. Dieser Geräte-Treiber lädt die im nicht-flüchtigen Speicher 13 der Messvorrichtung abgelegten Kalibrationsdaten in den externen Rechner. Schliesslich initialisiert sich die Steuerelektronik E der Messvorrichtung und vollführt einen Selbst-Test. Von diesem Moment an kann die im externen Rechner geladene Applikations-Software (das Anwendungsprogramm) mit der Messvorrichtung kommunizieren.

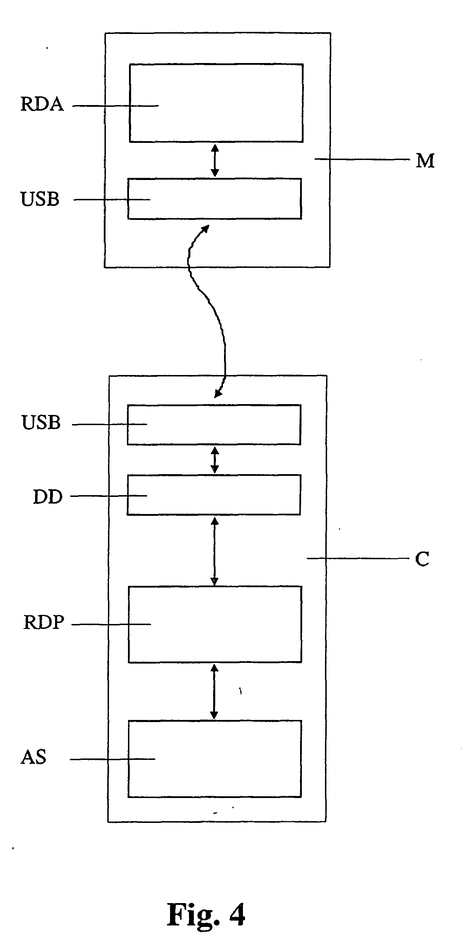

Die grundsätzliche Software-(Programm-)Architketur für den Betrieb der Messvorrichtung ist schematisch in Fig. 4 dargestellt:

In der Messvorrichtung M befindet sich die zur Erfassung der rohen (unkalibrierten) Messdaten erforderliche Software RDA sowie das USB-Protokoll USB zur Ansteuerung der USB-Schnittstelle. Im externen Rechner (Host) C befinden sich das entsprechende USB-Protokoll USB und der erwähnte Geräte-Treiber DD, ein Aufbereitungsprogramm RDP für die von der Messvorrichtung M erzeugten und in den externen Rechner übertragenen rohen Messdaten (Kalibrierung mittels der zu Beginn in den externen Rechner geladenen Kalibrationsdaten, Berechnung von beispielsweise kolorimetrischen Daten (Farbwerten) aus den kalibrierten Messdaten) und ein Anwendungsprogramm ASW, das eine Benutzerschnittstelle zur Messvorrichtung zur Verfügung stellt und die vom Aufbereitungsprogramm berechneten aufbereiteten Messdaten in gewünschter Weise weiter verarbeitet. Beispielsweise kann das Anwendungsprogramm ermittelte Farbwerte in verschiedenen Darstellungen auf dem Bildschirm anzeigen. Das USB-Protokoll ist Industrie-Standard und bedarf deshalb keiner

Erklärung. Analoges gilt für den Einsatz einer Fire Wire Schnittstelle. Die übrigen Programme sind an sich auch schon von konventionellen Messvorrichtungen der gattungsgemässen Art bekannt und bedürfen deshalb für den Fachmann ebenfalls keiner näheren Erläuterung.

Ein typischer Ablauf für eine einzelne Remissionsmessung ist wie folgt:
Das Anwendungsprogramm ASW fordert einen Messvorgang an, nachdem ein entsprechendes Bedienungsorgan (Messauslöse-Knopf) entweder im Anwendungsprogramm oder in der Messvorrichtung M selbst (nicht dargestellt) betätigt worden ist.

Der externe Rechner C sendet die erforderlichen Messparameter (entsprechend der gewünschten Messung, z.B. Integrationszeit für die Fotodiodenanordnung) zur Messvorrichtung M.

Die Messvorrichtung stellt die Messparameter ein und startet die Aufladung der Energie-Speicherstufe 132.

Der externe Rechner C fordert die Ausführung einer Messung an.

Die Messvorrichtung M führt zuerst eine Dunkelmessung durch und speichert die rohen Messdaten, schaltet dann die Lampe 2 ein, führt die aktuelle Messung durch, speichert die dabei ermittelten Messdaten ab, schaltet die Lampe wieder aus und bereitet die rohen Messdaten aus Dunkelmessung und aktueller Messung für die Datenübertragung vor.

Der externe Rechner C überträgt die bereitgestellten rohen Messdaten in seinen Speicher und stellt sie dem Datenaufbereitungsprogramm zur Verfügung.

Das Datenaufbereitungsprogramm kalibriert die rohen Messdaten mittels der Kalibrationsdaten und berechnet aus den kalibrierten Messdaten der Dunkelmessung und der aktuellen Messung anhand diverser Algorithmen Spektraldaten und kolorimetrische Werte etc..

Das Anwendungsprogramm ASW verwendet diese Werte seiner Bestimmung gemäss.

Eine kontinuierliche (Serien-) Remissionsmessung verläuft ähnlich, jedoch wird die Lampe 2 zwischen den einzelnen Messungen nicht abgeschaltet. Die Übertragung der rohen Daten kann z. B. während der jeweils nächstfolgenden Messung (Integrationsdauer) erfolgen. Die Dunkelmessung wird nur einmal ausgeführt.

Für Transmissions- und Emissionsmessungen wird die Lampe 2 nicht eingeschaltet, und für die Berechnung der kolorimetrischen Werte etc. werden andere Algorithmen benutzt.

## Patentansprüche

1. Farbmessvorrichtung (M) für von einem Messobjekt (T) mit Farbfeldern emittiertes, remittiertes oder transmittiertes Licht, mit einem optischen Messkopf (H) zur Erfassung des vom Messobjekt ausgehenden zu messenden Lichts, mit einem optisch mit dem Messkopf (H) verbundenen Spektrometer (S) zur Zerlegung des vom Messkopfs (H) erfassten Messlichts in seine spektralen Anteile, welches Spektrometer (S) einen fotoelektrischen Wandler (4) zur Erzeugung von den spektralen Anteilen des Messlichts entsprechenden analogen elektrischen Signalen aufweist, mit einem Analog/Digital-Wandler (11) zur Umwandlung der vom fotoelektrischen Wandler (4) erzeugten analogen elektrischen Signale in entsprechende digitale Messdaten, mit einem digitalen Rechner (10) zur Steuerung des fotoelektrischen Wandlers (4) und des Analog/Digital-Wandlers (11), mit einer bi-direktionalen Schnittstelle (5) zur Verbindung des Rechners (10) mit einem externen Rechner (C) und mit einem den Rechner (10) steuernden Programm zur Kommunikation des Rechners (10) mit dem externen Rechner (C) über die Schnittstelle (5), wobei Messvorgänge durch den externen Rechner (C) veranlasst und die dabei erzeugten digitalen Messdaten über die Schnittstelle (5) zum externen Rechner (C) übertragen werden können, **dadurch gekennzeichnet, dass** die bidirektionale Schnittstelle (5) eine Hochleistungsdatenschnittstelle, insbesondere eine USB- oder eine Fire Wire- Schnittstelle (5) ist, und dass die Stromversorgung sämtlicher elektrischen Komponenten (2,4,E) der Farbmessvorrichtung (M) über die Schnittstelle (5) erfolgt, wobei eine mit der Schnittstelle (5) verbundene Stromversorgungsschaltung (100) vorgesehen ist, welche aus der über die Schnittstelle (5) vom externen Rechner (C) zugeführten Versorgungsspannung die für die einzelnen elektrischen Komponenten (2,4,E) der Farbmessvorrichtung (M) erforderlichen Versorgungsspannungen erzeugt, wobei die Stromversorgungsschaltung (100) eine elektrische Speicherstufe (132) aufweist, die während der Phasen, in denen eine Lampe (2) nicht eingeschaltet ist, über einen vorgeschalteten Gleichspannungswandler (131) auf eine höhere Spannung als die zugeführte Versorgungsspannung aufgeladen werden kann, um der Lampe (2) während der Einschaltphase und bis zum Erreichen des stationären Zustands die nötige zusätzliche elektrische Leistung bereit zu stellen,
wobei die Stromversorgungsschaltung (100) weiter einen Überbrückungsschalter (133) aufweist, der den Gleichspannungswandler (131) und die elektrische Speicherstufe (132) überbrückt, wenn die Lampe (2) im stationären Zustand ist, um die Lampe (2) direkt aus der Versorgungsspannung der bi-direktionalen Schnittstelle (5) zu speisen.

2. Farbmessvorrichtung (M) nach Anspruch 1, **dadurch gekennzeichnet, dass** die Farbmessvorrichtung (M) einen mit dem Rechner (10) verbundenen nichtflüchtigen Speicher (13) aufweist, in welchem für die Farbmessvorrichtung (M) spezifische Katibrationsdaten abgelegt sind, und dass das Programm in der Lage ist, die Kalibrationsdaten aus dem Speicher (13) über die Schnittstelle (5) in den externen Rechner (C) zu übertragen.

3. Farbmessvorrichtung (M) nach einem der vorangehenden Ansprüche, **dadurch gekennzeichnet, dass** die Lampe (2) für Remissionsmessungen zur Beleuchtung des Messobjekts (T) vorgesehen ist.

4. Farbmessvorrichtung (M) nach einem der vorangehenden Ansprüche, **dadurch gekennzeichnet, dass** das Spektrometer (S) in einem im Wesentlichen aus Kunststoff bestehenden Gehäuse ein konkaves Reflexionsbeugungsgitter (3) als dispergierendes Element und eine lineare Fotodiodenanordnung (4) als fotoelektrischen Wandler enthält und mit einer thermischen Drift-Kompensation versehen ist.

5. Farbmessvorrichtung (M) nach einem der vorangehenden Ansprüche, **dadurch gekennzeichnet, dass** die Farbmessvorrichtung (M) in einem kontinuierlichen Betriebs-Modus größenordnungsmäßig mindestens etwa 100 Messungen pro Sekunde durchführen kann und somit ganze Farbstreifen durch Überstreichen mit dem Messkopf (H) automatisch erfassen kann.

6. Farbmessvorrichtung (M) nach einem der vorangehenden Ansprüche, **dadurch gekennzeichnet, dass** die Farbmessvortichtung (M) im Wesentlichen nur zur Erfassung von rohen Messdaten ausgelegt ist und im Wesentlichen keine Funktionen für die Verarbeitung dieser rohen Messdaten aufweist.

7. Farbmessvorrichtung (M) nach einem der vorangehenden Ansprüche, **dadurch gekennzeichnet, dass** der Messkopf (H) an seinem unteren Ende mit einem auswechselbar befestigten, mit einer Messöffnung (63) versehenen Tubus (60) versehen ist.

8. Farbmessvorrichtung (M) nach Anspruch 7, **dadurch gekennzeichnet, dass** mindestens zwei unterschiedliche, wechselweise befestigbare Tuben (60) vorgesehen sind, welche für unterschiedliche Messanwendungen angepasst sind.

9. Farbmessvorrichtung (M) nach einem der vorangehenden Ansprüche, **dadurch gekennzeichnet, dass** die Farbmessvorrichtung (M) mit einem Führungsorgan (R) zu ihrer linearen Führung über eine ebene Unterlage ausgestattet ist, wobei der Messkopf (H) der Farbmessvorrichtung (M) mit einer mechanischen Schnittstelle (60) versehen ist, mittels welcher er mechanisch mit dem Führungsorgan (R) gekoppelt werden kann.

10. Farbmessvorrichtung (M) nach den Ansprüchen 7 und 9, **dadurch gekennzeichnet, dass** das Führungsorgan (R) als Verschiebelehre mit einem geraden Führungsschlitz (50) und der Tubus (60) in den Führungsschlitz (50) einhängbar ausgebildet ist, wobei die mechanische Schnittstelle des Messkopfs (H) durch den Tubus (60) gebildet ist.

11. Farbmessvorrichtung (M) nach einem der vorangehenden Ansprüche, **dadurch gekennzeichnet, dass** die Farbmessvorrichtung (M) mit einer Haltevorrichtung (70) zum Fixieren der Messvorrichtung an der Mattscheibe (80) eines Monitors oder an einem LCD-Display ausgestattet ist, wobei die Haltevorrichtung (70) lösbar mit der Messvorrichtung verbindbar ist.

12. Farbmessvorrichtung (M) nach Anspruch 11, **dadurch gekennzeichnet, dass** die Haltevorrichtung (70) lösbar am Tubus (60) befestigbar ist.

13. Farbmessvorrichtung (M) nach Anspruch 8, **dadurch gekennzeichnet, dass** einer der Tuben (60) für die Messung von Umgebungslicht ausgebildet und dazu mit einer Streuscheibe (66) versehen ist.

## Claims

1. A device (M) for measuring the colour of light emitted, remitted, or transmitted from an object of measurement (T) with colour fields, having an optical measuring head (H) for capturing the light to be measured emanating from the object of measurement, having a spectrometer (S) optically connected to the measuring head (H) for splitting up the measured light captured by the measuring head (H) into its spectral components, said spectrometer (S) including a photoelectric converter (4) for generating analogue electrical signals corresponding to the spectral components of the measured light, having an analogue/digital converter (11) for converting the analogue electrical signals generated by the photoelectric converter (4) into corresponding digital measurement data, having a digital computer (10) for controlling the photoelectric converter (4) and the analogue/digital converter (11), having a bidirectional interface (5) for connecting the computer (10) to an external computer (C) and having a program controlling the computer (10) for the communication of the computer (10) with the external computer (C) via the interface (5), whereby measurement operations can be initiated by the external computer (C) and the digital measurement data generated thereby can be transmitted via the interface (5) to the external computer (C),
**characterised in that** the bidirectional interface (5) is a high-performance data interface, in particular a USB or a fire wire interface (5),
and **in that** the power supply of all electric components (2, 4, E) of the colour measurement device (M) is performed via the interface (5), whereby there is provided a power supply circuit (100) connected to the interface (5) for generating the supply voltages required for the individual electrical components (2, 4, E) of the colour measurement device (M) from the supply voltage supplied by the external computer (C) via the interface (5), whereby the power supply circuit (100) comprises an electric memory stage (132), which can be charged up via an upstream dc converter (131) to a higher voltage than the supplied supply voltage during the phases in which a lamp (2) is not switched on, in order to provide the necessary additional electric power to the lamp (2) during the switching-on phase and until the stationary state has been reached,
whereby the power supply voltage (100) also comprises a bypass switch (133) for bypassing the dc converter (131) and the electrical memory stage (132) when the lamp (2) is in the stationary state, in order to supply the lamp (2) directly from the supply voltage of the bidirectional interface (5).

2. A colour measurement device (M) according to Claim 1,
**characterised in that** the colour measurement device (M) comprises a non-volatile memory (13) connected to the computer (10), in which memory calibration data specific for the colour measurement device (M) are stored,
and **in that** the program is able to transfer the calibration data from the memory (13) to the external computer (C) via the interface (5).

3. A colour measurement device (M) according to one of the preceding Claims,
**characterised in that** the lamp (2) for remission measurements is provided for illuminating the object of measurement (T).

4. A colour measurement device (M) according to one of the preceding Claims,
**characterised in that** the spectrometer (S) contains a concave reflection diffraction grating (3) as a dispersing element in a housing made substantially from a plastic material, and a linear photodiode arrangement (4) as a photoelectric converter, and is provided with thermal drift compensation.

5. A colour measurement device (M) according to one of the preceding Claims,
**characterised in that** the colour measurement device (M) can perform at least roughly 100 measurements per second in a continuous mode of operation and thus can automatically capture entire colour strips by scanning with the measuring head (H).

6. A colour measurement device (M) according to one of the preceding Claims,
**characterised in that** the colour measurement device (M) is configured substantially for only capturing raw measurement data and has substantially no function for the processing of this raw measurement data.

7. A colour measurement device (M) according to one of the preceding Claims,
**characterised in that** at its lower end the measuring head (H) is provided with an exchangeably fastened adapter (60) provided with a measurement opening (63).

8. A colour measurement device (M) according to Claim 7,
**characterised in that** at least two different, alternately fastenable adapters (60) are provided, which are adapted for different measurement applications.

9. A colour measurement device (M) according to one of the preceding Claims,
**characterised in that** the colour measurement device (M) is equipped with a guide member (R) for linearly guiding the device over a planar base, with the measuring head (H) of the colour measurement device (M) being provided with a mechanical interface (60) by means of which it can be mechanically coupled with the guide member (R).

10. A colour measurement device (M) according to Claims 7 and 9,
**characterised in that** the guide member (R) is designed as a displaceable gauge with a straight guide slot (50) and the adapter (60) is designed to be suspended in the guide slot (50), with the mechanical interface of the measuring head (H) being formed by the adapter (60).

11. A colour measurement device (M) according to one of the preceding Claims,
**characterised in that** the colour measurement device (M) is equipped with a holding device (70) for fastening the measurement device to the screen (80) of a monitor or to an LCD-display, with the holding device (70) being detachably connectable to the measuring device.

12. A colour measurement device (M) according to Claim 11,
**characterised in that** the holding device (70) can be detachably fixed to the adapter (60).

13. A colour measurement device (M) according to Claim 8,
**characterised in that** one of the adapters (60) is designed for measuring ambient light and for this purpose it is provided with a scatter disk (66).

## Revendications

1. Dispositif colorimétrique (M) pour une lumière émise, réfléchie ou transmise par un objet de mesure (T) à champs chromatiques, avec une tête de mesure optique (H) pour la saisie de la lumière à mesurer partant de l'objet de mesure, avec un spectromètre (S) relié optiquement à la tête de mesure (H) pour la dispersion des composants spectraux de la lumière de mesure saisie par l'objet à mesurer (H), ledit spectromètre (S) comportant un convertisseur photoélectrique (4) pour la génération de signaux électriques analogiques correspondant aux composants spectraux de la lumière de mesure, avec un convertisseur analogique/numérique (11) pour la conversion des signaux électriques analogiques générés par le convertisseur photoélectrique (4) en données de mesure numériques correspondantes, avec un calculateur numérique (10) pour la commande du convertisseur photoélectrique (4) et du convertisseur analogique/numérique (11), avec un port bidirectionnel (5) pour la liaison du calculateur (10) avec un calculateur externe (C) et avec un programme de commande du calculateur (10) pour la communication entre le calculateur (10) et le calculateur externe (C) via le port (5), des processus de mesure pouvant être activés par le calculateur externe (C) et les données de mesure numérique alors générées être transmises au calculateur externe (C) via le port (5), **caractérisé en ce que** le port bidirectionnel (5) est un port de données à haut débit, en particulier un port (5) USB ou FireWire, et **en ce que** l'alimentation en courant de tous les composants électriques (2, 4, E) du dispositif colorimétrique (M) est effectuée via le port (5), un circuit d'alimentation en courant (100) relié au port (5) étant prévu, lequel génère les tensions d'alimentation exigées pour les différents composants électriques (2, 4, E) du dispositif colorimétrique (M) à partir de la tension d'alimentation appliquée via le port (5) du calculateur externe (C), le circuit d'alimentation en courant (100) comportant un étage de sauvegarde électrique (132) pouvant être chargé à une tension supérieure à la tension d'alimentation appliquée via un convertisseur continu-continu (131) en amont pendant les phases où une lampe (2) n'est pas activée, pour préparer la puissance électrique additionnelle nécessitée pour la lampe (2) pendant la phase d'activation et jusqu'à ce que l'état stationnaire soit atteint,
le circuit d'alimentation en courant (100) comportant en outre un contacteur de pontage (133), lequel ponte le convertisseur continu-continu (131) et l'étage de sauvegarde électrique (132) quand la lampe (2) est en état stationnaire, pour alimenter la lampe (2) directement à partir de la tension d'alimentation du port bidirectionnel (5).

2. Dispositif colorimétrique (M) selon la revendication 1, **caractérisé en ce que** le dispositif colorimétrique (M) comporte une mémoire non volatile (13) reliée au calculateur (10), où sont archivées des données de calibrage spécifiques au dispositif colorimétrique (M), et **en ce que** le programme est apte à transmettre les données de calibrage de la mémoire (13) au calculateur externe (C) via le port (5).

3. Dispositif colorimétrique (M) selon l'une des revendications précédentes, **caractérisé en ce que** la lampe est prévue pour des mesures de réflexion pour l'éclairage de l'objet de mesure (T).

4. Dispositif colorimétrique (M) selon l'une des revendications précédentes, **caractérisé en ce que** le spectromètre (S) contient, dans un boîtier formé essentiellement en matière synthétique, un réseau de diffraction en réflexion concave (3) en tant qu'élément de dispersion et un agencement de photodiodes linéaire (4) en tant que convertisseur photoélectrique, et est pourvu d'une compensation de dérive thermique.

5. Dispositif colorimétrique (M) selon l'une des revendications précédentes, **caractérisé en ce que** le dispositif colorimétrique (M) peut dans un mode de service continu exécuter au moins une centaine de mesures par seconde en ordre de grandeur, et saisir ainsi automatiquement des barres de couleur entières par balayage par la tête de mesure (H).

6. Dispositif colorimétrique (M) selon l'une des revendications précédentes, **caractérisé en ce que** le dispositif colorimétrique (M) n'est essentiellement prévu que pour la saisie de données de mesure brutes et ne présente essentiellement aucune fonction pour le traitement desdites données de mesure brutes.

7. Dispositif colorimétrique (M) selon l'une des revendications précédentes, **caractérisé en ce que** la tête de mesure (H) est munie à son extrémité inférieure d'un tube (60) fixé de manière à pouvoir être changé et pourvu d'une ouverture de mesure (63).

8. Dispositif colorimétrique (M) selon la revendication 7, **caractérisé en ce qu'**au moins deux tubes (60) différents, fixables en alternance, sont prévus, lesquels sont adaptés pour des applications de mesure différentes.

9. Dispositif colorimétrique (M) selon l'une des revendications précédentes, **caractérisé en ce que** le dispositif colorimétrique (M) est pourvu d'un organe de guidage (R) pour son guidage linéaire sur un substrat plan, la tête de mesure (H) du dispositif colorimétrique (M) étant munie d'une interface mécanique (60) au moyen de laquelle elle peut être mécaniquement accouplée à l'organe de mesure (R).

10. Dispositif colorimétrique (M) selon les revendications 7 et 9, **caractérisé en ce que** l'organe de guidage (R) est réalisé comme calibre de déplacement avec une fente de guidage droite (50) et **en ce que** le tube (60) est accrochable dans la fente de guidage (50), l'interface mécanique de la tête de mesure (H) étant formée par le tube (60).

11. Dispositif colorimétrique (M) selon l'une des revendications précédentes, **caractérisé en ce que** le dispositif colorimétrique (M) est pourvu d'un dispositif de maintien (70) pour la fixation du dispositif de mesure sur l'écran (80) d'un moniteur ou sur un écran LCD, le dispositif de maintien (70) étant raccordable au dispositif de mesure de manière à en rester amovible.

12. Dispositif colorimétrique (M) selon la revendication 11, **caractérisé en ce que** le dispositif de maintien (70) est fixable au tube (60) de manière à en rester amovible.

13. Dispositif colorimétrique (M) selon la revendication 8, **caractérisé en ce qu'**un des tubes (60) est réalisé pour la mesure de lumière ambiante et est pourvu d'un verre diffuseur (66) à cet effet.
